# EUROPÄISCHE PATENTANMELDUNG

(11) **EP 0 899 517 A2**
(43) Veröffentlichungstag der Anmeldung: **03.03.1999**
(21) Anmeldenummer: 98115488.3
(22) Anmeldetag: 18.08.1998
(51) Int. Cl.: F24D 3/16

(54) **Abdeckeinheit für Raumheizungs- bzw. Kühlungsanlagen**

(30) Priorität: 30.08.1997 DE 29715643 U; 01.04.1998 DE 19814466
(71) Anmelder: Reckzeh, Manfred, 63457 Hanau (DE)
(72) Erfinder: Reckzeh, Manfred, 63457 Hanau (DE)
(74) Vertreter: Bonsmann, Manfred, Dipl.-Ing.

(57) **Zusammenfassung**

Die Erfindung betrifft eine Abdeckeinheit (14) zur Ausbildung von Hohlräumen zur Aufnahme einer Raumheizungs- bzw. Kühlungsanlage in raumbegrenzenden Bauteilen mit wenigstens einem Heiz- bzw. Kühlrohr (10) mit wenigstens einer auf dieses aufsetzbaren Wärmeleitlamelle (12), wobei die Abdeckeinheit (14) auf einem tragenden Bauteil aufliegt und zu diesem hin offen ausgebildet ist, die Abdeckeinheit (14) zur Raumseite hin eine tragende Oberseite bildet und die Wärmeleitlamelle (12) in Teilbereichen innenseitig gegen die tragende Oberseite der Abdeckeinheit anliegt. Die Tragfähigkeit der Abdeckeinheit (14) wird erfindungsgemäß dadurch erhöht, daß wenigstens eine gegen die Wärmeleitlamelle (12) und gegen das tragende Bauteil anliegende Traverse (15) vorgesehen ist.

## Beschreibung

Die Erfindung betrifft eine Abdeckeinheit zur Ausbildung von Hohlräumen zur Aufnahme einer Raumheizungs- bzw. Kühlungsanlage in raumbegrenzenden Bauteilen mit wenigstens einem Heiz- bzw. Kühlrohr mit wenigstens einer auf dieses aufsetzbaren Wärmeleitlamelle, wobei die Abdeckeinheit auf einem tragenden Bauteil aufliegt und zu diesem hin offen ausgebildet ist, die Abdeckeinheit zur Raumseite hin eine tragende Oberseite bildet und die Wärmeleitlamelle in Teilbereichen innenseitig gegen die tragende Oberseite der Abdeckeinheit anliegt.

Derartige Abdeckeinheiten werden für den Aufbau von Wand-, Decken- oder Fußbodenheizungsanlagen, die prinzipiell - wie nachfolgend nicht jedesmal explizit erwähnt - auch zur Kühlung eingesetzt werden können, verwendet. Die Wärmeleitlamellen dienen dazu, einen möglichst gleichmäßigen und direkten Wärmekontakt zwischen Heizrohren und den raumbegrenzenden Bauteilen, also dem Fußboden, den Wänden oder der Decke des Raumes, herzustellen, so daß die erforderliche Heizleistung mit möglichst geringer Heizrohrlänge sowie möglichst großflächig erzielt werden kann.

Aus der CH 650 584 A5 ist eine Abdeckeinheit für eine Raumheizungs- bzw. Kühlungsanlage der eingangs genannten Art bekannt, bei der Schalkörper mit lose gehalterten Wärmeleitlamellen auf vormontierte Heizrohre aufgesetzt werden, wodurch die Mittelbereiche der Wärmeleitlamellen auf die Heizrohre gedrückt bzw. aufgeclipst werden.

Ein Nachteil der bekannten Abdeckeinheit liegt zum einen in der relativ großen Bauhöhe. Damit die Schalkörperoberseite die erforderliche Stabilität gegenüber einem Durchbiegen bei Belastungen aufweist, sind relativ dickwandige Kunststoffstrukturen mit Verstärkungsrippen erforderlich, wodurch die Bauhöhe vergrößert wird.

Um die erforderliche Stabilität gegenüber einem Durchbiegen zu erreichen, ist die Breite der bekannten Abdeckeinheiten begrenzt. Die bekannten Abdeckeinheiten werden in regelmäßigen Abständen durch die auf dem tragenden Bauteil aufliegenden Seitenwände abgestützt. Die maximale Breite der Abdeckeinheiten bestimmt jedoch auch die maximale Breite der Wärmeleitlamellen. Es ist wünschenswert, möglichst breite Wärmeleitlamellen verwenden zu können, weil dadurch der Montage- und Herstellungsaufwand reduziert und eine besonders gleichmäßige Wärmeverteilung erreicht wird. Bei handelsüblichen Abdeckeinheiten ist die Breite der wärmeleitlamellen aus den vorstehend genannten gründen jedoch auf ca. 60 mm begrenzt. Ein weiterer Grund für die begrenzte Breite bei bekannten Abdeckeinheiten liegt darin, daß der Heizungsaufbau häufig auf relativ weichen Isolierplatten erfolgt, deren Druckbelastbarkeit begrenzt ist. Bei breiteren Abdeckeinheiten würde der Flächenanteil der auf den Isolierplatten aufliegenden Unterstützungsflächen kleiner, so daß über diese Unterstützungsflächen ein größerer Druck ausgeübt würde, wodurch es zur Deformation der Isolierplatten kommen kann.

Die Aufgabe der vorliegenden Erfindung besteht demgemäß darin, eine Abdeckeinheit der eingangs genannten Art dahingehend zu verbessern, daß die Verwendung breiterer Lamellen bei ausreichender Stabilität und geringerer Bauhöhe möglich wird.

Erfindungsgemäß wird diese Aufgabe dadurch gelöst, daß wenigstens eine gegen die Wärmeleitlamelle und gegen das tragende Bauteil anliegende Traverse vorgesehen ist. Dadurch, daß die Traverse gegen die Wärmeleitlamelle und gegen das tragende Bauteil anliegt, wird die tragende Oberseite der Abdeckeinheit gegenüber einem Durchbiegen abgestützt, ohne daß die Abmessungen der Wärmeleitlamellen durch die zusätzliche Abstützungsmaßnahme begrenzt wären. Vorteilhaft ist weiterhin, daß die wärmeleitlamelle durch die Traversen gegen die innenseitige Oberseite der Abdeckeinheit gedrückt wird, was die Wärmeübertragung verbessert. Die Oberseite kann dementsprechend glatt ohne zusätzliche Stützrippen ausgebildet sein, wodurch die Bauhöhe von ca. 35 mm bei bekannten Einheiten auf ca. 25 mm reduziert wird. Die Traversen können mit einer großen Auflagefläche ausgebildet werden, so daß eine Deformation von weichen Isoliermaterialien zuverlässig vermieden wird.

In zweckmäßiger Ausgestaltung der Erfindung kann vorgesehen sein, daß die wenigstens eine Traverse im wesentlichen parallel zum Heiz- bzw. Kühlrohr verlaufend angeordnet ist und von einem Paar Befestigungseinrichtungen im Bereich der Seitenwände der Abdeckeinheit gehalten wird.

Weiterhin kann vorgesehen sein, daß die Traverse in die Befestigungseinrichtungen ohne Werkzeug einrastbar ist, beispielsweise durch eine Zapfenverbindung. Dadurch, daß die Traversen auf einfache Weise abnehmbar sind, können die Wärmeleitlamellen problemlos vor der Montage ausgetauscht werden. Dadurch ist eine individuelle Einstellung der Breite der Wärmeleitlamelle bei der Montage möglich. Somit kann die Wärmeabgabe individuell an die jeweiligen Erfordernisse angepaßt werden.

Besonders zweckmäßig können im Bereich der Seitenwände mehrere Paare von Befestigungseinrichtungen zur Befestigung der Traverse in verschiedenen Abständen parallel zum Heiz- bzw. Kühlrohr vorgesehen sein. Dadurch kann die Abdeckeinheit an unterschiedliche Flügellängen der Wärmeleitlamellen angepaßt werden. Außerdem können zusätzliche Traversen eingesetzt werden, falls eine stärkere Abstützung erforderlich erscheint.

Weiterhin kann vorgesehen sein, daß die Abdeckeinheit Verbindungseinrichtungen zur lösbaren Verbindung mehrerer Abdeckeinheiten parallel und/oder quer zur Rohrrichtung aufweist. Dadurch können die Abdeckeinheiten in einem festen Raster verlegt werden, wobei eine plane Oberfläche mit nur kleineren Zwischenräumen entsteht. Auf diese im wesentlichen plane Oberfläche kann entweder direkt ein Fußboden- bzw. Wandbelag (Trockenaufbau) oder eine Estrich- oder Putzschicht aufgebracht werden. Die genannten Verbindungseinrichtungen weisen vorzugsweise ein Doppel-T-förmiges Profil auf, wobei die Höhe des Profils der der zu verbindenden Abdeckeinheiten entspricht. Die Verbindungseinrichtungen ermöglichen somit eine zusätzliche Abstützung des Wand- Boden- bzw. Deckenbelags gegenüber der tragenden Oberfläche.

Insbesondere bei Raumkühlungsanlagen kann vorgesehen sein, daß durch die in Rohrrichtung hintereinanderliegenden Abdeckeinheiten ein Luftstrom hindurchgeleitet wird, durch den die Bildung von Kondenswasser vermieden wird.

Die Erfindung wird nachfolgend unter Bezugnahme auf die Zeichnungen beispielhaft näher erläutert. Es zeigen:
- Fig. 1: eine Draufsicht einer erfindungsgemäßen Abdeckeinheit,
- Fig. 1A: eine Querschnittsansicht entlang der Linie A-A von Fig. 1,
- Fig. 2: eine Draufsicht zweier durch Verbindungselemente verbundener Abdeckeinheiten, und
- Fig. 3A: eine Querschnittsansicht entlang der Linie B-B von Fig. 2.

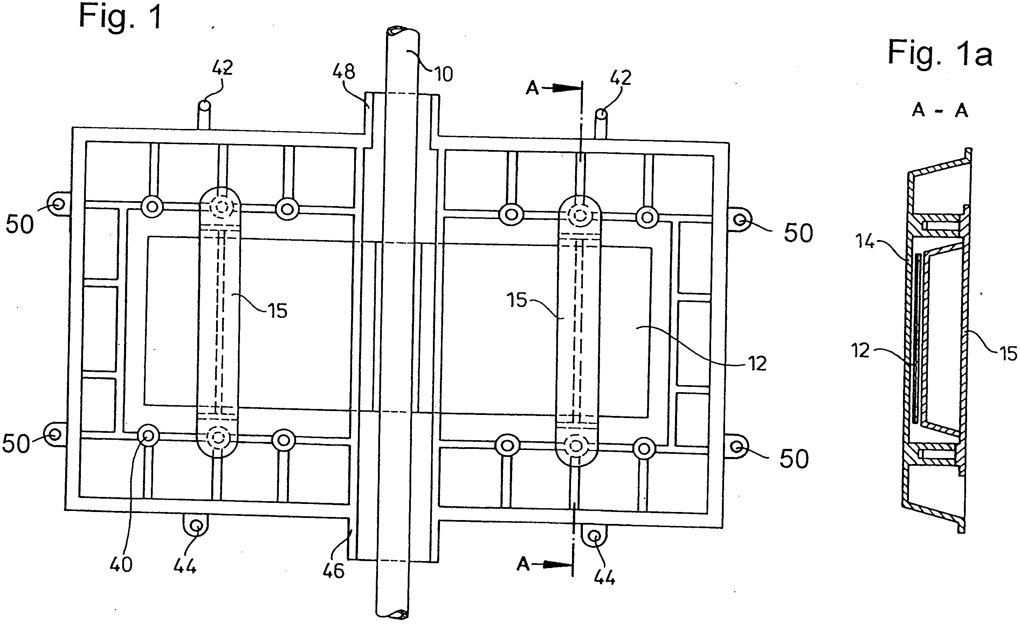

Die in den Fig. 1 bzw. 1A dargestellte Abdeckeinheit 14 liegt auf einer (nicht dargestellten) tragenden Oberfläche, z.B. einer Isolierplatte oder einem Betonboden gemäß Fig. 1 auf. Auf der Abdeckeinheit befindet sich im Trockenaufbau eine - nicht dargestellte - Bauplatte mit darauf befindlichem Fußbodenbelag, wie z.B. einem Parkettbodenbelag oder im Naßaufbau eine Estrichschicht. Durch eine tunnelförmige Passage 48 der Abdeckeinheit verläuft ein Heizrohr 10, das z.B. aus Kupfer, Kunststoff oder Verbundmaterialien bestehen kann. Die von dem Heizrohr 10 abgegebene Wärme wird über eine Wärmeleitlamelle 12 an den Fußboden abgegeben. Die aus Metall - z.B. aus Aluminium hergestellte - Wärmeleitlamelle 12 ist mit ihrem Mittelteil 18 auf das Heizrohr 10 teilumschließend aufgesetzt, wodurch das Heizrohr fixiert wird und gleichzeitig eine gute Wärmeleitung gewährleistet ist. Die Abdeckeinheit ist vorzugsweise aus Kunststoff - besonders bevorzugt aus Polystyrol-(PS)-Recyclaten - hergestellt. Die Wärmeleitlamelle 12 wird mittels Doppel-T-förmiger Traversen 15 gegen die Innenseite der Abdeckungen 14 gedrückt und so fixiert. Die Traversen 15 erhöhen gleichzeitig die Stabilität der Abdeckungen 14 gegenüber Biegebeanspruchungen und sorgen für eine größere Unterstützungsfläche. Die Traversen weisen an beiden Stirnenden jeweils Zapfen auf, die jeweils in entsprechende Gegenelemente in der Oberseite der Abdeckeinheit eingesteckt werden können. Zur Verstärkung können auch pro Seitenflügel der Wärmeleitlamelle jeweils mehrere (z.B. zwei) Traversen 15 vorgesehen sein, wodurch ein gleichmäßigeres Anliegen der Wärmeleitlamellen 12 und eine noch bessere Abstützung der Abdeckungen 14 gewährleistet wird. Hierzu sind in verschiedenen Abständen vom Rohr jeweils gegenüberliegende Paare von Halteelementen vorgesehen. Durch die Abstützwirkung der Traversen 15 ist eine Verwendung breiterer Wärmeleitlamellen von bis zu 150 mm und mehr möglich. Es können jedoch auch selbstverständlich schmalere Wärmeleitlamellen eingesetzt werden. Die Breite der Wärmeleitlamellen kann vor der Montage durch den Monteur bestimmt und jeweils individuell eingesetzt werden. Durch die Wahl der Lamellenbreite kann die jeweils lokal gewünschte Heizleistung abgestimmt werden. Da der von der Wärmeleitlamelle belegte Bereich infolge der Traversen frei von Stützrippen ausgebildet ist, ist die Bauhöhe der erfindungsgemäßen Abdeckeinheit reduziert. Innenseitige Stützrippenstrukturen sind lediglich in den Randbereichen der Abdeckeinheit vorgesehen. Die Abdeckeinheit weist weiterhin Verbindungszapfenelemente 42 bzw. korrespondierende Verbindungselemente 44 auf, um mehrere Abdeckungen 14 parallel zur Rohrrichtung miteinander zu verbinden.

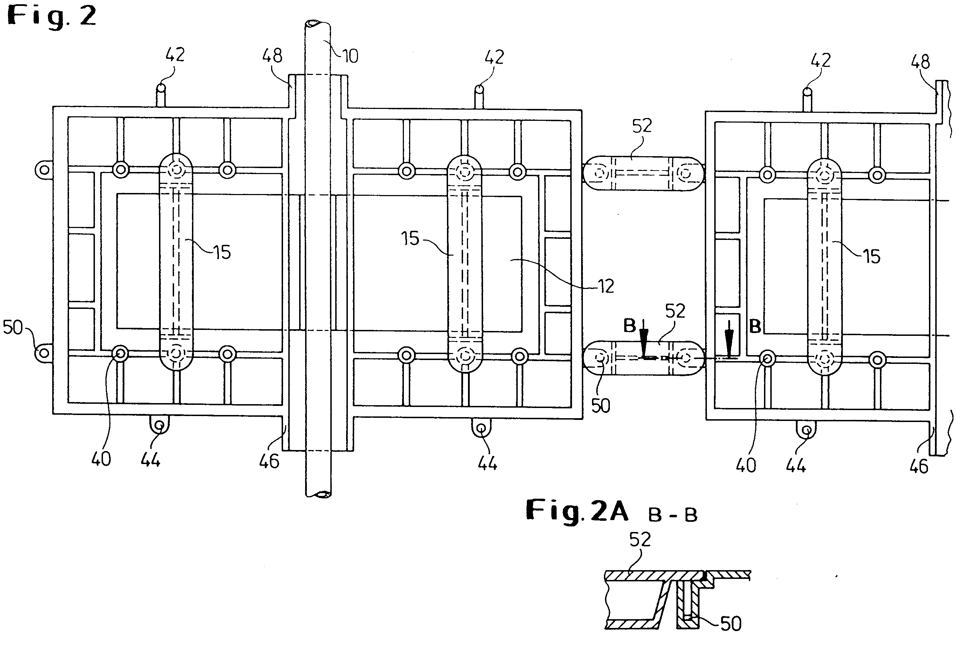

Zur Verbindung mehrerer Abdeckeinheiten 14 quer zur Rohrrichtung sind gemäß Fig. 2 und Fig. 2A Halterungselemente 50 vorgesehen, in die jeweils Distanzhalter 52 mit Zapfen eingesteckt sind. Die Distanzhalter 52 weisen einen Doppel-T-förmigen Querschnitt auf. Die Höhe der Distanzhalter 52 entspricht der Bauhöhe der Abdeckeinheit, so daß durch die Distanzhalter eine zusätzliche Abstützung bewirkt wird.

## Patentansprüche

1. Abdeckeinheit zur Ausbildung von Hohlräumen zur Aufnahme einer Raumheizungs- bzw. Kühlungsanlage in raumbegrenzenden Bauteilen mit wenigstens einem Heiz- bzw. Kühlrohr (10) mit wenigstens einer auf dieses aufsetzbaren Wärmeleitlamelle (12), wobei die Abdeckeinheit auf einem tragenden Bauteil aufliegt und zu diesem hin offen ausgebildet ist, die Abdeckeinheit zur Raumseite hin eine tragende Oberseite bildet und die Wärmeleitlamelle (12) in Teilbereichen innenseitig gegen die tragende Oberseite der Abdeckeinheit anliegt, dadurch gekennzeichnet, daß wenigstens eine gegen die Wärmeleitlamelle (12) und gegen das tragende Bauteil anliegende Traverse (15) vorgesehen ist.

2. Abdeckeinheit nach Anspruch 1, dadurch gekennzeichnet, daß die Traverse (15) im wesentlichen parallel zum Heiz- bzw. Kühlrohr (10) verlaufend angeordnet ist und von einem Paar Befestigungseinrichtungen im Bereich der Seitenwände der Abdeckeinheit gehalten wird.

3. Abdeckeinheit nach Anspruch 1 oder 2, dadurch gekennzeichnet, daß die Traverse (15) in die Befestigungseinrichtungen ohne Werkzeug einrastbar ist.

4. Abdeckeinheit nach einem der Ansprüche 1 bis 3, dadurch gekennzeichnet, daß im Bereich der Seitenwände mehrere Paare von Befestigungseinrichtungen zur Befestigung der Traverse in verschiedenen Abständen parallel zum Heiz- bzw. Kühlrohr vorgesehen sind.

5. Abdeckeinheit nach einem der Ansprüche 1 bis 4, dadurch gekennzeichnet, daß die Traverse (15) ein doppel-T-förmiges Querschnittsprofil mit Auflageflächen zur Wärmeleitlamelle (12) und zum tragenden Bauteil hin aufweist.

6. Abdeckeinheit nach einem der Ansprüche 1 bis 5, dadurch gekennzeichnet, daß die Abdeckeinheit Verbindungseinrichtungen (42) zur lösbaren Verbindung mehrerer Abdeckeinheiten parallel zur Rohrrichtung aufweist.

7. Abdeckeinheit nach einem der Ansprüche 1 bis 6, dadurch gekennzeichnet, daß die Abdeckeinheit Verbindungseinrichtungen (50) zur lösbaren Verbindung mehrerer Abdeckeinheiten quer zur Rohrrichtung aufweist.
